# EUROPÄISCHE PATENTSCHRIFT

(11) **EP 0 884 726 B1**
(45) Veröffentlichungstag und Bekanntmachung des Hinweises auf die Patenterteilung: **16.03.2005**
(21) Anmeldenummer: 98201937.4
(22) Anmeldetag: 09.06.1998
(51) Int. Cl.: G11B 17/26

(54) **Wechsler-Gerät für Informationsplatten**
Disc changer
Changeur de disques

(30) Priorität: 11.06.1997 DE 19724543
(43) Veröffentlichungstag der Anmeldung: 16.12.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Kletzl, Franz, Röntgenstrasse 24, 22335 Hamburg (DE)
(74) Vertreter: von Laue, Hanns-Ulrich, Dipl.-Ing.

(56) Entgegenhaltungen:
- EP-A- 0 833 324
- GB-A- 2 296 811
- PATENT ABSTRACTS OF JAPAN vol. 018, no. 429 (P-1785), 10. August 1994 & JP 06 131793 A (CLARION CO LTD), 13. Mai 1994

## Beschreibung

Die Erfindung bezieht sich auf ein Wechsler-Gerät für Informationsplatten gemäß dem Oberbegriff des Patentanspruchs 1.

Unter Gewinde wird eine spiralförmige Bahn verstanden, die unterschiedliche Steigungen aufweisen kann.

Ein Wechsler-Gerät für Informationsplatten ist aus der JP-A-6-131793 bekannt. Bei diesem bekannten Gerät sind vier mit einem Außengewinde versehene Gewindespindeln vorgesehen. Es sind mehrere Ablagefächer zur Ablage von jeweils einer Informationsplatte vorgesehen, die jeweils vier Bohrungen mit einem Innengewinde aufweisen, in welches das Außengewinde der Gewindespindel eingreift. Die Außengewinde der Gewindespindeln weisen in axialer Richtung in dem oberen und dem unteren Stapelbereich eine kleine Steigung auf und in einem Zwischenbereich zwischen dem oberen und dem unteren Stapelbereich eine große Steigung auf. Bei Rotation der Gewindespindeln werden die Ablagefächer in der vertikalen Richtung transportiert, wobei der Zwischenbereich zum Lesen der einzelnen Informationsplatten jeweils frei von Ablagefächern ist. Es ist eine Leseeinheit vorgesehen, die an einem Schwenkarm angeordnet ist und zum Lesen in den Zwischenbereich der Stapeleinheit eingeschwenkt wird.

Eine derartige an einem Schwenkarm angeordnete Leseeinheit hat den Nachteil, daß sie störungsempfindlich gegenüber äußeren Vibrationen und Erschütterungen ist.

Dies ist insbesondere bei Verwendung des Wechsler-Gerätes in Kraftfahrzeugen von Bedeutung.

Aus der Europäischen Patentanmeldung EP-A-0 833 324, die zur Definition der zweiteiligen Form verwendet wird, ist ein Wechslergerät für Informationsplatten bekannt, bei dem die Informationsplatte mittels Transportmitteln horizontal von einer Auswurfposition in eine Ladeposition befördert wird. Um abgespielt werden zu können, wird die Informationsplatte von anderen Transportmitteln vertikal von der Ladeposition in eine Spielposition gefahren.

Es ist Aufgabe der Erfindung, ein anderes Wechsler-Gerät der eingangs genannten Art zu schaffen.

Diese Aufgabe ist erfindungsgemäß gelöst durch ein Wechslergerät für Informationsplatten mit den Merkmalen des Patentanspruchs 1.

Zum Laden einer Informationsplatte in die Stapeleinheit wird die Informationsplatte zunächst von der Hand einer Bedienperson in die Auswurfposition gebracht. Mittels der Transportmittel wird diese Informationsplatte dann in ein sich in der Ladeposition befindliches Ablagefach der Stapeleinheit transportiert. Mittels Rotation der Spindel wird dieses Ablagefach dann zusammen mit der Informationsplatte in eine der Stapelpositionen in dem unteren oder in dem oberen Stapelbereich transportiert.

Zum Transport einer Informationsplatte aus der Stapelposition in die Spielposition wird diese Informationsplatte zusammen mit dem Ablagefach mittels Rotation der Spindel zunächst in die Ladeposition überführt. Aus dieser Ladeposition wird die Informationsplatte dann mittels der Transportmittel aus dem Ablagefach herausgeholt und in die Spielposition überführt. Die Transportmittel sind ebenfalls zum Transport der Informationsplatte in die Auswurfposition vorgesehen. Die Spielposition ist zwischen der Auswurfposition und der Ladeposition angeordnet.

Ein derartiges Wechsler-Gerät hat den Vorteil, daß eine Lese/Schreib-Einheit, die zum Lesen von auf den Informationsplatten gespeicherten Informationen und/oder zum Schreiben von Informationen auf die Informationsplatten vorgesehen ist, einfacher von äußeren Störungen und Vibrationen entkoppelbar ist.

Dies ist insbesondere bei Wechsler-Geräten vorteilhaft, die für einen Einsatz in Kraftfahrzeugen vorgesehen sind.

Eine weitere vorteilhafte Ausgestaltung der Erfindung ist dadurch gekennzeichnet, daß der Mittelbereich in axialer Richtung der Spindel beiderseits der Ladeposition Abstandsbereiche aufweist, die einen axialen Abstand zwischen dem sich jeweils in der Ladeposition befindlichen Ablagefach und den axial benachbarten Ablagefächern in den Stapelpositionen sicherstellen.

Die beiderseits der Ladeposition, d.h. oberhalb und unterhalb der Ladeposition angeordneten Abstandsbereiche schaffen Platz für die Transportmittel und ermöglichen es diesen, eine Informationsplatte in ein Ablagefach in der Ladeposition hinein zu transportieren bzw. eine Informationsplatte aus einem Ablagefach in der Ladeposition heraus zu transportieren, ohne die anderen Ablagefächer zu berühren.

Eine weitere vorteilhafte Ausgestaltung der Erfindung ist dadurch gekennzeichnet, daß die mittlere Gewindesteigung der Spindel in der Ladeposition kleiner als die mittlere Gewindesteigung in dem oberen und dem unteren Stapelbereich ist.

Die Gewindesteigung der Spindel in dem oberen und dem unteren Stapelbereich ist im wesentlichen durch die Höhe der Ablagefächer bestimmt. Für einen störungsfreien und sicheren Zugriff der Transportmittel auf die sich in der Ladeposition befindliche Informationsplatte ist es vorteilhaft, daß die axiale Stellung der Informationsplatte in der Ladeposition möglichst exakt bestimmt ist. Daher ist es günstig, die mittlere Gewindesteigung der Spindel in der Ladeposition kleiner als die mittlere Gewindesteigung in dem oberen und dem unteren Stapelbereich zu wählen. Je kleiner die mittlere Gewindesteigung der Spindel in der Ladeposition ist, desto geringer wirken sich Drehwinkeltoleranzen des Rotationswinkels der Gewindespindel auf die axiale Position der Ablagefächer und der Informationsplatte in der Ladeposition aus. Besonders vorteilhaft ist es daher, daß die Gewindesteigung der Spindel in der Ladeposition im wesentlichen gleich Null ist. Dadurch kann die Ladeposition hinsichtlich der axialen Höhe sehr genau und reproduzierbar von den einzelnen Ablagefächern angefahren werden. Toleranzen hinsichtlich des Rotationswinkels der Gewindespindel, die z.B. durch den Nachlauf des Antriebssystems der Gewindespindel bzw. durch Schritt-Toleranzen eines die Gewindespindel antreibenden Schrittmotors verursacht werden, wirken sich so gar nicht bzw. nur sehr gering auf die axiale Höhe der Ladeposition aus.

Eine weitere vorteilhafte Ausgestaltung der Erfindung ist dadurch gekennzeichnet, daß die mittlere Gewindesteigung in den Abstandsbereichen größer als die mittlere Gewindesteigung in dem oberen und dem unteren Stapelbereich ist.

Je größer die mittlere Gewindesteigung in den Abstandsbereichen ist, desto größer ist der axiale Abstand zwischen dem Ablagefach in der Ladeposition und den benachbarten Ablagefächern in dem unteren und dem oberen Stapelbereich und desto mehr Platz haben die Transportmittel zum Zugriff auf die Informationsplatte.

Eine weitere vorteilhafte Ausgestaltung der Erfindung ist dadurch gekennzeichnet, daß zur Führung der Informationsplatten in den Ablagefächern der Stapeleinheit ein unterer und ein oberer Führungszapfen vorgesehen ist, der von oben bzw. von unten in die Mittelöcher der Informationsplatten einfahrbar ist.

Eine derartige Anordnung verhindert, daß die Informationsplatten bei der axialen Bewegung der Ablagefächer in radialer Richtung aus den Ablagefächern herausrutschen. Die radiale Position der Informationsplatten innerhalb der Stapeleinheit wird durch die Führungszapfen exakt bestimmt. Zum Transport einer Informationsplatte aus einem sich in der Ladeposition befindlichen Ablagefach bzw. in ein sich in der Ladeposition befindliches Ablagefach wird der obere und der untere Führungszapfen hoch bzw. herunter gefahren.

Eine weitere vorteilhafte Ausgestaltung der Erfindung ist dadurch gekennzeichnet, daß eine zum Lesen von auf den Informationsplatten gespeicherten Informationen und/oder zum Schreiben von Informationen auf die Informationsplatten vorgesehene Lese/Schreib-Einheit verschiebbar an einer Chassisplatte des Geräts angelagert ist.

Dadurch läßt sich der zur Verfügung stehende Bauraum optimal nutzen. Dies ist inbesondere bei Anwendungen im Automobilbereich wichtig, da dort der zur Verfügung stehende Bauraum sehr begrenzt ist.

Eine weitere vorteilhafte Ausgestaltung der Erfindung ist dadurch gekennzeichnet, daß die Lese/Schreib-Einheit eine Basisplatte und eine Laserplatte aufweist, daß die Basisplatte und die Laserplatte mittels Dämpfern gekoppelt sind, daß die Basisplatte an der Chassisplatte verschiebbar angelagert ist und daß an der Laserplatte eine Klemmvorrichtung zum Festklemmen der Informationsplatte in der Spielposition und eine optische Einheit angeordnet sind.

Mittels einer derartigen Anordnung läßt sich eine sehr gute Entkopplung der Lese/Schreib-Einheit in der Spielposition gegenüber äußeren Vibrationen und Erschütterungen erzielen.

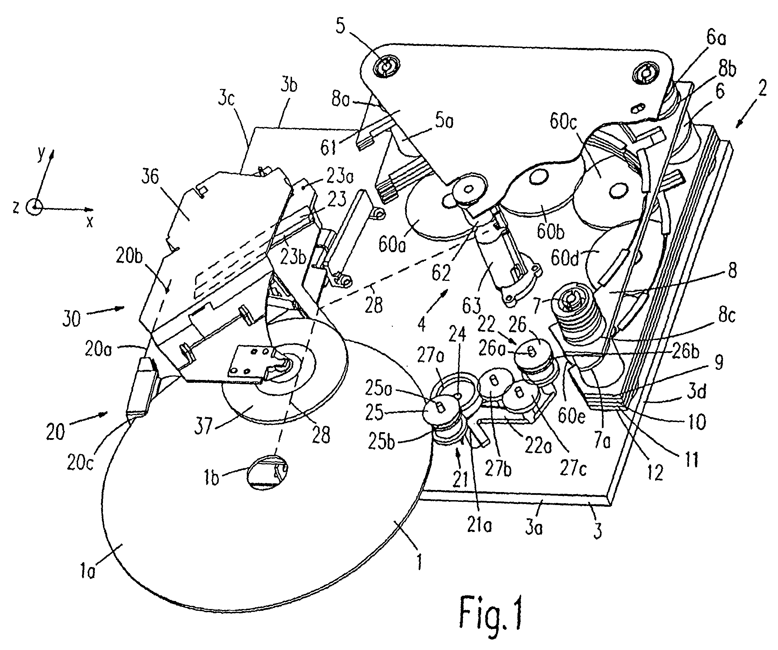

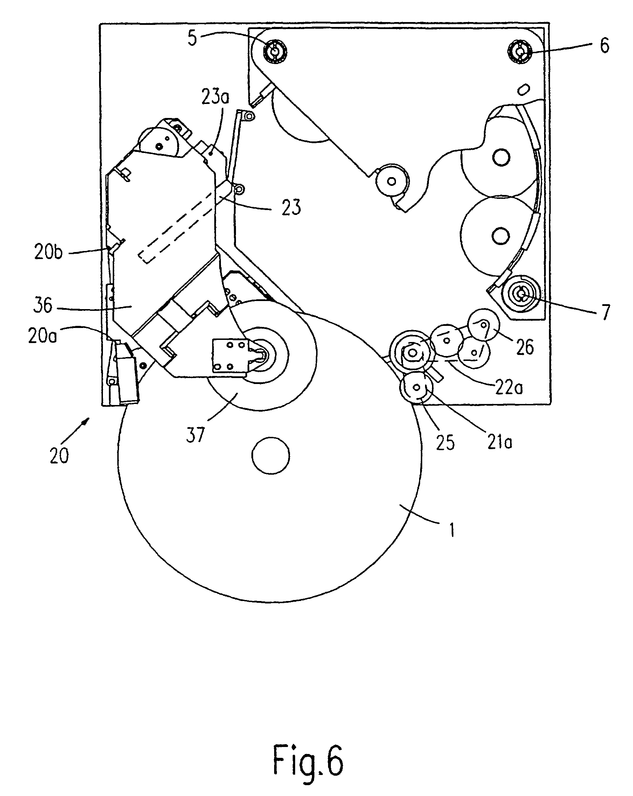

Ein schematisch dargestelltes Ausführungsbeispiel der Erfindung wird nachfolgend anhand der Zeichnung in den Fig. 1 bis 13 näher erläutert. Es zeigen:
Fig. 1 eine perspektivische Ansicht eines Wechsler-Gerätes für Informationsplatten mit einer Informationsplatte, die sich in einer Auswurfposition befindet, in der sie von der Hand einer Bedienperson aus dem Gerät entnommen werden kann, sowie mit einer Leseeinheit zum Lesen von auf der Informationsplatte gespeicherten Informationen und einer Stapeleinheit zur Stapelung von wenigstens zwei Informationsplatten, sowie mit einer ersten, einer zweiten, einer dritten und einer vierten Führung zum Transport der Informationsplatte von der Auswurfposition in eine Spielposition und in eine Ladeposition,
Fig 2 eine Vorderansicht auf das Wechsler-Gerät in der Auswurfstellung gemäß Fig. 1,
Fig.3 eine perspektivische Darstellung der Leseeinheit,
Fig. 4 eine perspektivische Ansicht von Teilen des Wechsler-Gerätes mit einer Schiebeplatte, die zur Verschiebung der nicht dargestellten Leseeinheit und zur Steuerung des Verschwenkens der ersten, der zweiten, der dritten und der vierten Führung vorgesehen ist, sowie zur Steuerung von Führungszapfen der Stapeleinheit und eines Klemmarms der Leseeeinheit
Fig. 5 eine Seitenansicht auf das Wechsler-Gerät in der Auswurfposition gemäß Fig. 1,
Fig. 6 eine Draufsicht auf des Wechsler-Gerät in der Auswurfposition gemäß Fig. 1,
Fig. 7 eine Seitenansicht auf das Wechsler-Gerät in einer ersten Zwischenposition, in der die Informationsplatte zwischen einem Klemmteller und einem Antriebsteller der Leseeinheit freiliegt, wobei die Informationsplatte ausgehend von dieser ersten Zwischenposition sowohl in die Spielposition als auch in die Ladeposition transportierbar ist.
Fig. 8 eine Seitenansicht auf das Wechsler-Gerät in einer zweiten Zwischenposition, in der die Informationsplatte zwischen Klemmteller und Antriebsteller der Leseeinheit festgeklemmt ist,
Fig.9 eine Draufsicht auf das Wechsler-Gerät in der ersten Zwischenposition, wobei die Informationsplatte von der ersten, der zweiten, der dritten und der vierten Führung gehalten wird,
Fig. 10 eine Draufsicht auf das Wechsler-Gerät in einer Spielposition, wobei die erste, die zweite, die dritte und die vierte Führung von dem Plattenrand der Informationsplatte weggeschwenkt sind, die Informationsplatte zwischen dem Antriebsteller und dem Klemmteller der Leseeinheit geklemmt ist und die auf der Informationsplatte gespeicherten Informationen mittels der Leseeinheit auslesbar sind,
Fig. 11 eine Seitenansicht des Wechsler-Gerätes in der Spielposition,
Fig. 12 eine Draufsicht auf das Wechsler-Gerät mit einer Informationsplatte in der Ladeposition,
Fig. 13 eine perspektivische Ansicht des Wechsler-Gerätes gemäß Fig. 12 mit einer Informationsplatte in der Ladeposition,

Fig. 1 zeigt eine perspektivische Ansicht eines Wechsler-Gerätes für Informationsplatten mit einer Informationsplatte 1, die sich in einer Auswurfposition befindet, in der sie von der Hand einer Bedienperson aus dem Gerät entnommen werden kann bzw. in die sie von der Hand der Bedienperson zum Laden in das Gerät eingebracht wird. Die Informationsplatte 1 weist einen kreisförmigen Plattenrand 1a und ein Mittelloch 1b auf. auf. Das Wechsler-Gerät ist in einem nur teilweise dargestellten Gehäuse 2 angeordnet, welches als Grundplatte eine Chassisplatte 3 aufweist. Die Chassisplatte 3 weist eine Vorderkante 3a, eine Rückkante 3b, eine linke Seitenkante 3c sowie eine rechte Seitenkante 3d auf. Die Chassisplatte 3 erstreckt sich in einer x-y-Ebene, wobei die x-Richtung von links nach rechts in Richtung der Vorderkante 3a und die y-Richtung in Richtung der linken Seitenkante 3c definiert wird. Senkrecht zu der x-y-Ebene ist eine z-Richtung definiert. Gemäß der in der Fig. 1 gezeigten perspektivischen Darstellung ist in dem hinteren, rechten Bereich des Gehäuses 2 eine Stapeleinheit 4 angeordnet, welche eine erste Gewindespindel 5, eine zweite Gewindespindel 6 und eine dritte Gewindespindel 7 aufweist, die sich vertikal zu der Chassisplatte 3 in der z-Richtung erstrecken. Die erste Gewindespindel 5 weist ein Außengewinde 5a, die zweite Gewindespindel 6 ein Außengewinde 6a und die dritte Gewindespindel 7 ein Außengewinde 7a auf. Es sind ein erstes Ablagefach 8, ein zweites Ablagefach 9, ein drittes Ablagefach 10, ein viertes Ablagefach 11 und ein fünftes Ablagefach 12 vorgesehen, die in der z-Richtung übereinander angeordnet sind und welche zur Ablage jeweils einer Informationsplatte vorgesehen sind. Das erste Ablagefach 8 weist eine erste Öffnung 8a auf, in die das Außengewinde 5a der ersten Gewindespindel 5 eingreift, eine zweite Öffnung 8b, in die das Außengewinde 6a der zweiten Gewindespindel 6 eingreift und eine dritte Öffnung 8c, in die das Außengewinde 7a der dritten Gewindespindel 7 eingreift. In analoger Weise weisen das zweite Ablagefach 9, das dritte Ablagefach 10, das vierte Ablagefach 11 und das fünfte Ablagefach 12 ebenfalls jeweils drei nicht näher bezeichnete Öffnungen auf, in die die Außengewinde der ersten Gewindespindel 5, der zweiten Gewindespindel 6 und der dritten Gewindespindel 7 eingreifen. Die erste Gewindespindel 5, die zweite Gewindespindel 6 und die dritte Gewindespindel 7 sind mittels einer Zahnradkette 60, bestehend aus den Zahnrädern 60a, 60b, 60c, 60d und 60e von einem nicht näher dargestellten Antriebsmechanismus antreibbar. Alternativ ist auch ein Antrieb mittels eines Zahnriemens möglich. Mittels der Rotation der Gewindespindeln 5, 6 und 7 lassen sich die Ablagefächer 8, 9, 10, 11 und 12 in der vertikalen z-Richtung bewegen.
Im Zentrum der Stapeleinheit 4 ist an einer oberen Deckelplatte 61 ein oberer Führungszapfen 62 und an der Chassisplatte 3 ein unterer Führungszapfen 63 vorgesehen. Der obere Führungszapfen 62 und der untere Führungszapfen 63 können mittels eines nicht näher dargestellten Antriebsmechanismus in der z-Richtung verfahren werden.

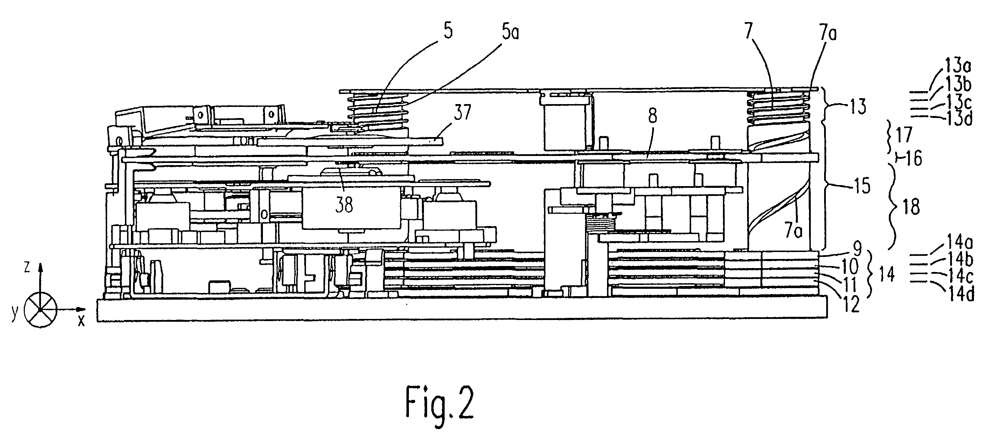

Die Funktionsweise der Stapeleinheit 4 wird nachfolgend anhand der Fig. 2 näher erläutert, welche eine Vorderansicht auf das Wechsler-Gerät in der Auswurfstellung gemäß Fig. 1 darstellt. Die dritte Gewindespindel 7 und in entsprechender Weise die erste Gewindespindel 5 und die in Fig. 2 nicht erkennbare zweite Gewindespindel 6 weisen einen oberen Stapelbereich 13, einen unteren Stapelbereich 14 und zwischen dem oberen Stapelbereich 13 und dem unteren Stapelbereich 14 einen Mittelbereich 15 auf. Der Mittelbereich 15 weist eine vertikale Ladeposition 16 auf, die durch einen oberen Abstandsbereich 17 vom oberen Stapelbereich 13 und durch einen unteren Abstandsbereich 18 von dem unteren Stapelbereich 14 getrennt ist. Das Außengewinde 7a der dritten Gewindespindel 7 und in entsprechender Weise die Außengewinde 6a und 5a der zweiten Gewindespindel 6 bzw. der ersten Gewindespindel 5 weisen in der Ladeposition 16 eine Steigung auf, die in einem Drehwinkelbereich von 45° gleich Null ist. In dem oberen Abstandsbereich 17 und dem unteren Abstandsbereich 18 weisen die Gewindespindeln 5, 6 und 7 jeweils eine Steigung auf, die im wesentlichen durch die vertikale Höhe in z-Richtung der Ablagefacher 8, 9, 10, 11 und 12 bestimmt ist. Die Steigung der Gewindespindeln 5, 6 und 7 ist in dem oberen Abstandsbereich 17 und in dem unteren Abstandsbereich 18 deutlich größer als die Steigung in der Ladeposition 16 und die Steigung in dem oberen Stapelbereich 13 und dem unteren Stapelbereich 14. In der in der Fig. 2 gezeigten Darstellung befindet sich das erste Ablagefach 8 in der Ladeposition, und die übrigen Ablagefacher 9, 10, 11 und 12 befinden sich in dem unteren Stapelbereich 14. Der untere Stapelbereich 14 weist eine erste Stapelposition 14a, eine zweite Stapelposition 14b, eine dritte Stapelposition 14c und eine vierte Stapelposition 14d auf. Der obere Stapelbereich 13 weist eine erste Stapelposition 13a, eine zweite Stapelposition 13b, eine dritte Stapelposition 13c und eine vierte Stapelposition 13d auf. In der in der Fig. 2 gezeigten Darstellung befindet sich in der ersten Stapelposition 14a des unteren Stapelbereiches 14 das zweite Ablagefach 9, in der zweiten Stapelposition 14b das dritte Ablagefach 10, in der dritten Stapelposition 14c das vierte Ablagefach 11 und in der vierten Stapelposition 14d das fünfte Ablagefach 12. Werden ausgehend von der in der Fig. 2 gezeigten Darstellung die Gewindespindeln 5, 6 und 7 gedreht, so wandert das sich in der Ladeposition 16 befindliche erste Ablagefach 8 in die vierte Stapelposition 13d des oberen Stapelbereichs 13, das zweite Ablagefach 9 wandert in die Ladeposition 16, das dritte Ablagefach 10 wandert in die erste Stapelposition 14a, das vierte Ablagefach 11 in die zweite Stapelposition 14b und das fünfte Ablagefach 12 in die dritte Stapelposition 14c des unteren Stapelbereichs 14. In entsprechender Weise können auch das dritte Ablagefach 10, das vierte Ablagefach 11 und das fünfte Ablagefach 12 jeweils nacheinander in die Stapelposition 16 überführt werden. Mittels Rotation der Gewindespindeln 5, 6 und 7 kann somit jedes der sich in dem unteren Stapelbereich 14 befindenden Ablagefächer 9, 10, 11 und 12 nacheinander in die Ladeposition 16 und die Ablagefächer 9, 10 und 11 mittels weiterer Rotation in den oberen Stapelbereich 13 überführt werden.

Bei der vertikalen Bewegung der Ablagefächer 8, 9, 10, 11 und 12 werden die sich in diesen Ablagefächern befindlichen Informationsplatten mittels des oberen Führungszapfens 62 und des unteren Führungszapfens 63 in der z-Richtung geführt, indem der obere Führungszapfen 62 und der untere Führungszapfen 63 in die Mittellöcher 1b der Informationsplatten 1 eingreifen.

Die weitere Beschreibung des Wechsler-Gerätes erfolgt nachfolgend anhand der Fig. 1. Zum Transport der Informationsplatte 1 von der in der Fig. 1 gezeigten Auswurfposition in das erste, sich in der Ladeposition 16 gemäß Fig. 2 befindliche Ablagefach 8 sind eine erste Führung 20, eine zweite Führung 21, eine dritte Führung 22 und eine vierte Führung 23 vorgesehen. Die erste Führung 20 ist als passive Stützführung ausgebildet und mittels eines Schwenkarmes 20a schwenkbar um eine Schwenkachse 20b an der linken Seite der Chassisplatte 3 angelagert. Die erste Führung 20 weist eine V-förmige Nut 20c auf, die zur Führung des Plattenrandes 1a der Informationsplatte 1 vorgesehen ist. Die zweite Führung 21 ist gegenüberliegend auf der rechten Seite des Gehäuses 2 angeordnet und weist ein erstes Transportrad 25 auf, das drehbar um eine Drehachse 25a an einem Schwenkarm 21a angelagert ist. Der Schwenkarm 21a ist um eine Schwenkachse 24 verschwenkbar an der Chassisplatte 3 angelagert. Zum Transport der Informationsplatte 1 weist das erste Transportrad 25 eine V-förmige Nut 25b auf, die zur Aufnahme des Plattenrandes 1a der Informationsplatte 1 vorgesehen ist. Es ist eine dritte Führung 22 vorgesehen, die ein zweites Transportrad 26 aufweist, das um eine Drehachse 26a drehbar an einem Schwenkarm 22a angelagert ist. Der Schwenkarm 22a ist um dieselbe Schwenkachse 24, um die auch der Schwenkarm 21a der zweiten Führung 21 gelagert ist, an der Chassisplatte 3 angelagert. Das zweite Transportrad 26 weist ebenfalls eine V-förmige Nut 26b auf. Das erste Transportrad 25 und das zweite Transportrad 26 sind mittels eines Zwischengetriebes 27, bestehend aus drei Zwischenrädern 27a, 27b und 27c drehend antreibbar. Das Zwischenrad 27a ist drehbar um die Drehachse 24 gelagert und wird über eine nicht näher dargestellte Antriebskette von einem nicht dargestellten Motor angetrieben. Die Zwischenräder 27b und 27c sind auf dem Schwenkarm 22a drehbar angelagert.

Die erste Führung 20, die zweite Führung 21, die dritte Führung 22 und die vierte Führung 23 sind jeweils mittels nicht dargestellter Federn in Richtung auf eine kurvenförmige Ladebahn 28 vorgespannt.
In der in der Fig. 1 gezeigten Auswurfposition der Informationsplatte 1 wird die erste Führung 20 mit der Nut 20c und das erste Transportrad 25 mit der Nut 25b infolge der Federverspannung der Schwenkarme 20a und 21a gegen den Plattenrand 1a der Informationsplatte 1 gedrückt. Das zweite Transportrad 26 der dritten Führung 22 wird auf nicht näher dargestellte Weise entgegen der Federverspannung von der Stapeleinheit 4 weggedrückt, so daß mittels Rotation der Gewindespindeln 5, 6 und 7 jedes beliebige der Ablagefächer 8, 9, 10, 11 und 12 in die Ladeposition 16 überführt werden kann. Dabei ist das Transportrad 26 so weit weggeschwenkt, daß auch sich evtl. in den Ablagefächern 8, 9, 10, 11, und 12 befindliche Informationsplatten von dem zweiten Transportrad 26 nicht berührt werden.

Im vorderen linken Bereich des Wechsler-Gerätes ist eine Leseeinheit 30 verschiebbar an der Chassisplatte 3 angelagert.

An der Leseeinheit 30 ist die vierte Führung 23 angeordnet, die als passive Stützführung ausgebildet ist und um eine Schwenkachse 23a verschwenkbar an der Leseeinheit 30 angelagert ist. Die vierte Führung 23 weist eine V-förmige Nut 23b zur Führung des Plattenrandes 1a der Informationsplatte 1 auf.

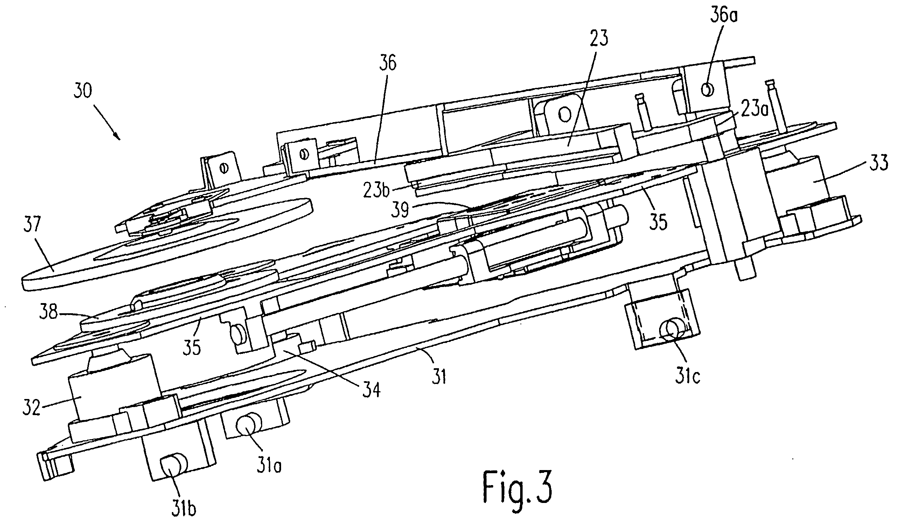

Der genauere Aufbau der Leseeinheit 30 wird nachfolgend anhand der Fig. 3 näher erläutert. Fig. 3 zeigt die Leseeinheit 30 in perspektivischer Darstellung. Die Leseeinheit 30 weist eine Basisplatte 31 mit einem ersten Führungszapfen 31a, einem zweiten Führungszapfen 31b und einem dritten Führungszapfen 31c auf. Die Basisplatte 31 ist mittels eines ersten Dämpfers 32, eines zweiten Dämpfers 33 und eines dritten Dämpfers 34 mit einer Laserplatte 35 gekoppelt. An der Laserplatte 35 ist ein Klemmarm 36 mit einem Klemmteller 37 drehbar um eine Klemmachse 36a angelagert. An der Laserplatte 35 ist ein Antriebsteller 38 angeordnet, der mittels eines nicht näher dargestellten Motors drehend antreibbar ist. Ferner ist an der Laserplatte 35 als optische Einheit eine Lasereinheit 39 verschiebbar angelagert. Die Basisplatte 31 der Leseeinheit 30 ist verschiebbar an der Chassisplatte 3 angelagert.

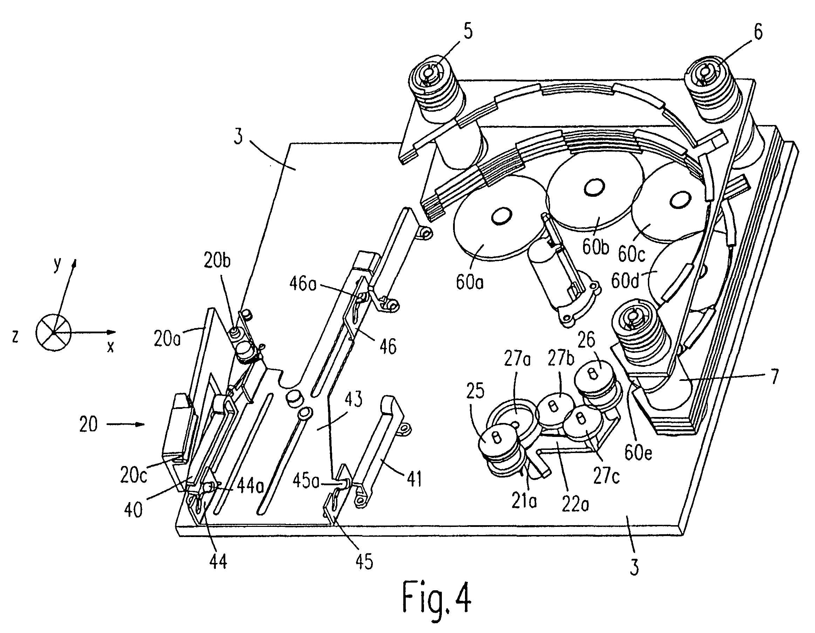

Zur Veranschaulichung dieser verschiebbaren Lagerung der Basisplatte 31 an der Chassisplatte 3 ist in der Fig. 4 eine perspektivische Ansicht von Teilen des Wechsler-Gerätes dargestellt, wobei die Leseeinheit 30, die Basisplatte 31 sowie die Informationsplatte 1 zur besseren Übersicht nicht dargestellt sind.

Zur Führung der Leseeinheit 30 sind gemäß Fig. 4 eine erste Führungsbahn 40 und eine zweite Führungsbahn 41 an der Chassisplatte 3 angeordnet. Die erste Führungsbahn 40 ist zur Führung des ersten Führungszapfens 31a der Basisplatte 31 und die zweite Führungsbahn 41 zur Führung des zweiten Führungszapfens 31b vorgesehen. Es ist eine Schiebeplatte 43 vorgesehen, die in der y-Richtung mittels eines nicht näher dargestellten Antriebsmechanismus bewegbar ist. Diese Schiebeplatte 43 weist einen ersten Schieber 44 mit einem V-förmigen Schiebeschlitz 44a, einen zweiten Schieber 45 mit einem V-förmigen Schiebeschlitz 45a und einen dritten Schieber 46 mit einem V-förmigen Schiebeschlitz 46a auf. Der V-förmige Schiebeschlitz 44a ist zur Führung des ersten Führungszapfens 31a der Basisplatte 31 und der V-förmige Schliebeschlitz 45a zur Führung des zweiten Führungszapfens 31b der Basisplatte 31 vorgesehen und der dritte V-förmige Schiebeschlitz 46a zur Führung des dritten Führungszapfens 31c der Basisplatte 31.

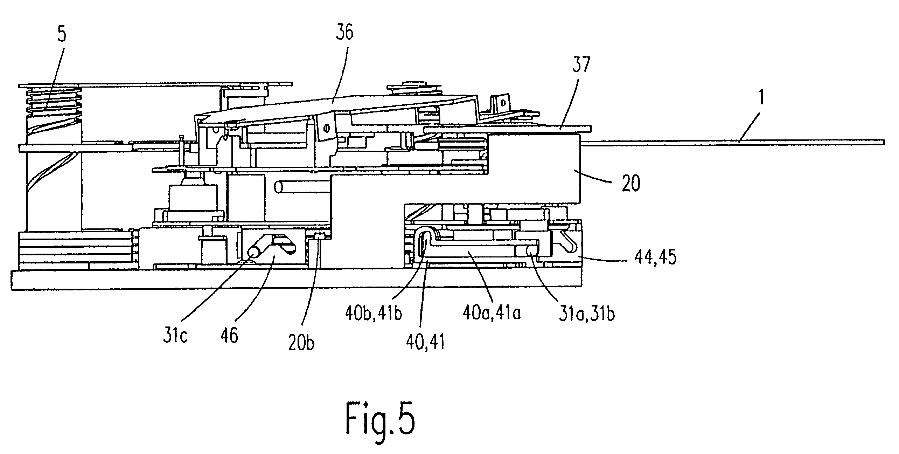

Fig. 5 zeigt eine Seitenansicht in x-Richtung auf das Wechslergerät in der Auswurfposition gemäß Fig. 1. Wie in der Fig. 5 zu erkennen ist, sind die erste Führungsbahn 40 und die zweite Führungsbahn 41 L-förmig ausgebildet und weisen dementsprechend horizontale Teilbahnen 40a bzw. 41a und vertikale Teilbahnen 40b bzw. 41b auf.

Der Klemmarm 36 mit dem Klemmteller 37 ist gemäß Fig. 5 geöffnet, d.h. der Klemmteller 37 drückt nicht auf den Antriebsteller 38.

Ausgehend von der in der Fig. 1 dargestellten Auswurfposition wird zum Transport der Informationsplatte 1 in die Stapeleinheit 4 bzw. in eine Spielposition das erste Transportrad 25 mittels des Zwischenrades 27a von einer nicht näher dargestellten Antriebseinheit drehend angetrieben, wodurch die Informationsplatte 1 unter Abstützung an der ersten Führung 20 auf der kurvenförmigen Ladebahn 28 in das Gerät hinein gerollt wird.

Gleichzeitig wird auch die Schiebeplatte 43 gemäß Fig. 5 und damit die Leseeinheit 30 in der y-Richtung in das Gerät eingefahren. Dabei wird der erste Führungszapfen 31a der Leseeinheit 30 in der ersten Führungsbahn 40 und der zweite Führungszapfen 31b in der zweiten Führungsbahn 41 geführt. Der erste Schieber 44, der zweite Schieber 45 und der dritte Schieber 46 üben dabei die Antriebskraft in der y-Richtung auf den ersten Führungszapfen 31a, den zweiten Führungszapfen 31b und den dritten Führungszapfen 31c der Basisplatte 31 aus.

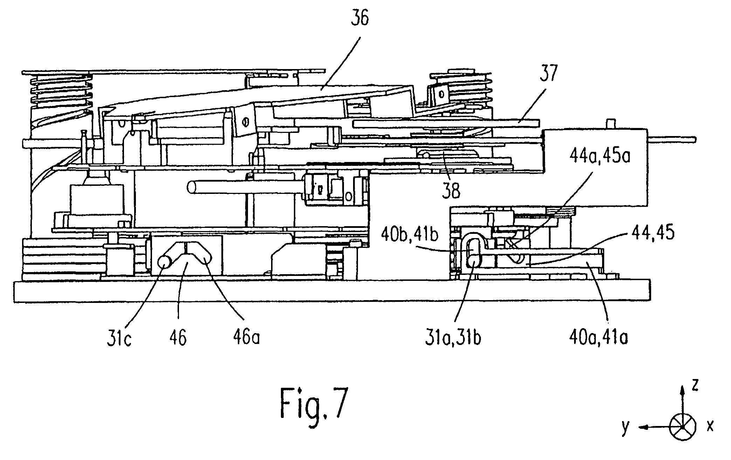

Fig. 7 zeigt eine Seitenansicht auf das Wechslergerät in einer ersten Zwischenposition. In dieser ersten Zwischenposition befinden sich der erste Führungszapfen 31a und der zweite Führungszapfen 31b der Basisplatte 31 am hinteren Ende der sich in der y-Richtung erstreckenden horizontalen Teilbahn 40a der ersten Führungsbahn 40 bzw. der horizontalen Teilbahn 41a der zweiten Führungsbahn 41. Mittels Weiterbewegen der Schieberplatte 43 in der y-Richtung werden der erste Führungszapfen 31a, der zweite Führungszapfen 31b und der dritte Führungszapfen 31c in den V-förmigen Schlitzen 44a, 45a bzw. 46a des ersten Schiebers 44, des zweiten Schiebers 45 bzw. des dritten Schiebers 46 in der z-Richtung nach oben gedrückt, wodurch eine zweite Zwischenposition erreicht wird. Der erste Führungszapfen 31a und der zweite Führungszapfen 31b gleiten dabei in den vertikalen Teilbahnen 40b und 41b hinauf.

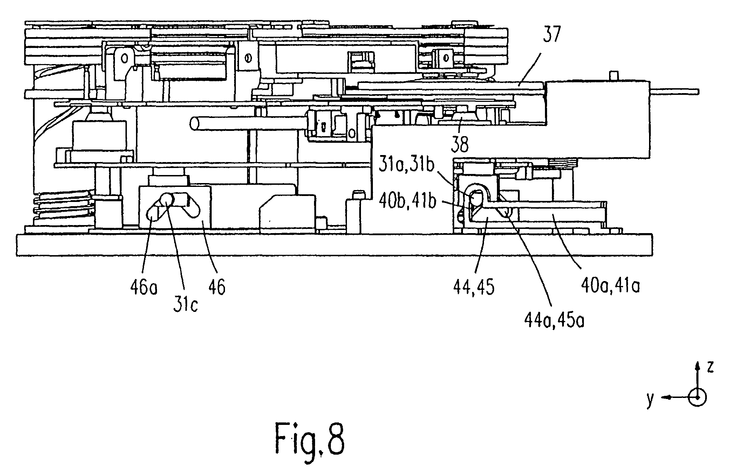

Die zweite Zwischenposition ist in Seitenansicht in der Fig. 8 dargestellt. In der Fig. 8 ist gezeigt, daß sich der erste Führungszapfen 31a und der zweite Führungszapfen 31b am oberen Ende der vertikalen Teilbahnen 40b bzw. 41b befinden. Dadurch ist die Leseeinheit 30 angehoben worden, wodurch der Klemmteller 37 auf nicht näher dargestellte Weise auf den Antriebsteller 38 gedrückt worden ist und die Informationsplatte 1 zwischen dem Klemmteller 37 und dem Antriebsteller 38 eingeklemmt worden ist.

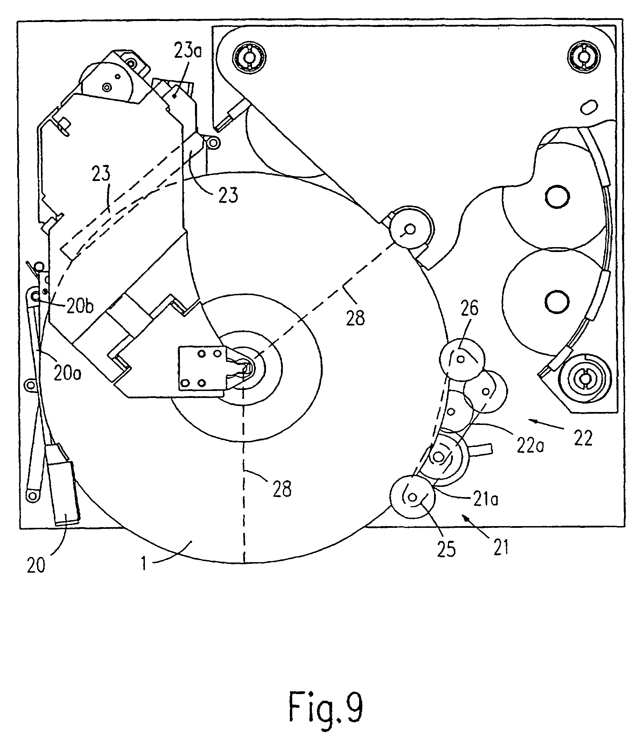

Fig. 9 zeigt die erste Zwischenposition gemäß Fig. 7 in Draufsicht. Aus Fig. 9 ist zu erkennen, daß die Informationsplatte 1 in der ersten Zwischenposition sowohl von der ersten Führung 20, der zweiten Führung 21 mit dem ersten Transportrad 25, der dritten Führung 22 mit dem Transportrad 26 als auch von der vierten Führung 23 gehalten wird. Die erste Führung 20, die zweite Führung 21, die dritte Führung 22 und die vierte Führung 23 werden infolge der Federvorspannung ihrer Schwenkarme gegen den Plattenrand 1a der Informationsplatte 1 gedrückt und fixieren die Informationsplatte 1 in der ersten Zwischenposition.

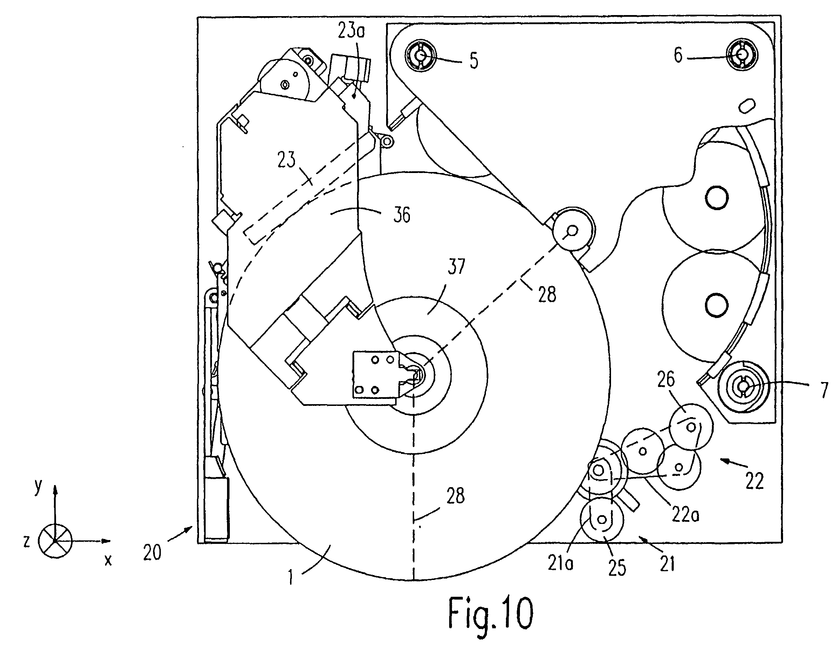

Fig. 10 zeigt das Wechslergerät mit der Informationsplatte 1 in einer Spielposition in Draufsicht. In dieser Spielposition sind die erste Führung 20, die zweite Führung 21 mit dem ersten Transportrad 26, die dritte Führung 22 mit dem zweiten Transportrad 26 sowie die vierte Führung 23 von der Informationsplatte 1 weggeschwenkt, so daß die V-förmigen Nuten dieser Führungen nicht mehr auf den Plattenrand der Informationsplatte 1 einwirken. Das Wegschwenken der ersten Führung 20, der zweiten Führung 21, der dritten Führung 22 und der vierten Führung 23 wird von der Bewegung der Schieberplatte 43 gesteuert, die zwischen der zweiten Zwischenposition und der Spielposition eine Bewegung in y-Richtung ausführt. Die Schieberplatte 43 drückt bei dieser Bewegung zwischen der zweiten Zwischenposition und der Spielposition die erste Führung 20, die zweite Führung 21, die dritte Führung 22 und die vierte Führung 23 entgegen den Vorspannkräften von der Informationsplatte 1 weg.

In der in der Fig. 10 dargestellten Spielposition wird die Informationsplatte 1 ausschließlich von dem Klemmteller 37 und dem Antriebsteller 38 gehalten. Durch Rotation des Antriebstellers 38 wird die Informationsplatte 1 in der Spielposition rotiert, und die auf der Informationsplatte 1 gespeicherten Informationen können mittels der Leseeinheit 30 gelesen werden. In der Spielposition ist die Laserplatte 35 mit der Basisplatte 31 und damit mit der Chassisplatte 3 nur über die Dämpfer 32, 33 und 34 gekoppelt. Äußere Vibrationen und Erschütterungen des Gehäuses 2 und der Chassisplatte 3 werden daher im Spielbetrieb mittels der Dämpfer 32, 33 und 34 von der Laserplatte 35 ferngehalten, sodaß die Leseeinheit 30 ohne Störungen durch äußere Vibrationen die auf der Informationsplatte 1 gespeicherten Informationen auslesen bzw. abspielen kann.

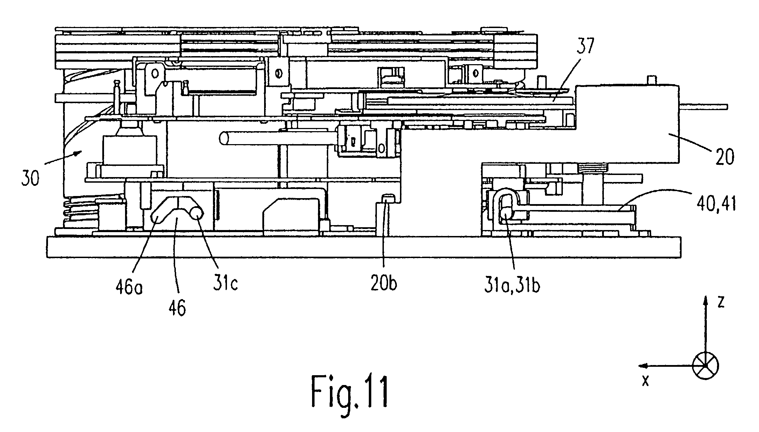

Fig. 11 zeigt eine Seitenansicht auf das Wechslergerät in der Spielposition. Gegenüber der in der Fig. 8 gezeigten zweiten Zwischenposition ist die Schieberplatte 43 in der y-Richtung verschoben worden, wodurch der erste Führungszapfen 31a, der zweite Führungszapfen 31b und der dritte Führungszapfen 31c in den V-förmigen Schiebeschlitzen 44a, 45a und 46a nach unten gedrückt worden sind. Dadurch ist auch die Leseeinheit 30 gegenüber der zweiten Zwischenposition abgesenkt worden.

Von der in den Fig. 7 und 9 dargestellten ersten Zwischenposition ist sowohl ein Transport der Informationsplatte 1 in die in den Fig. 10 und 11 dargestellte Spielposition möglich als auch ein Transport der Informationsplatte 1 in die Stapeleinheit 4.

Ausgehend von der ersten Zwischenposition gemäß Fig. 9 wird die Informationsplatte 1 zum Transport in die Stapeleinheit 4 auf der kurvenförmigen Ladebahn 28 in die Stapeleinheit 4 hinein gerollt. Der Antrieb erfolgt hierbei im wesentlichen von dem zweiten Transportrad 26, welches die Antriebsfunktion von dem ersten Transportrad 25 übernimmt. Die Abstützfunktion wird im wesentlichen von der vierten Führung 23 übernommen.

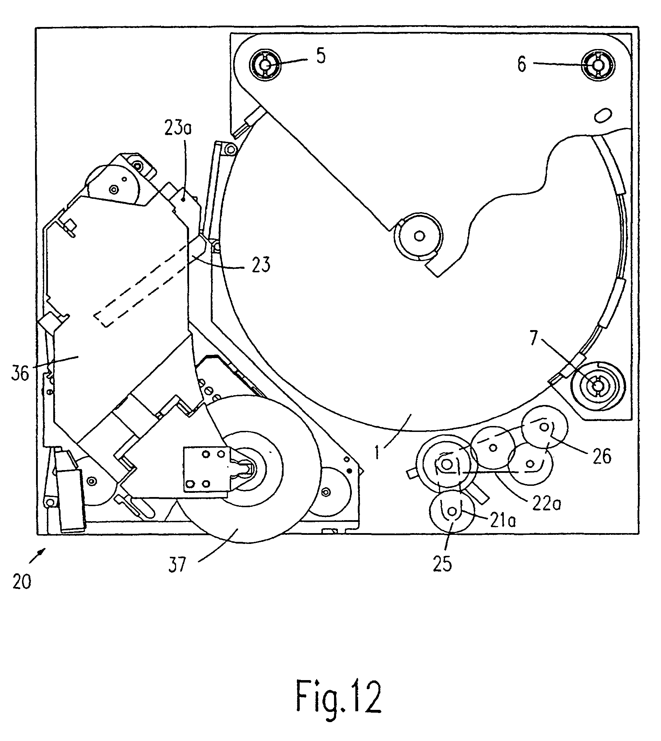

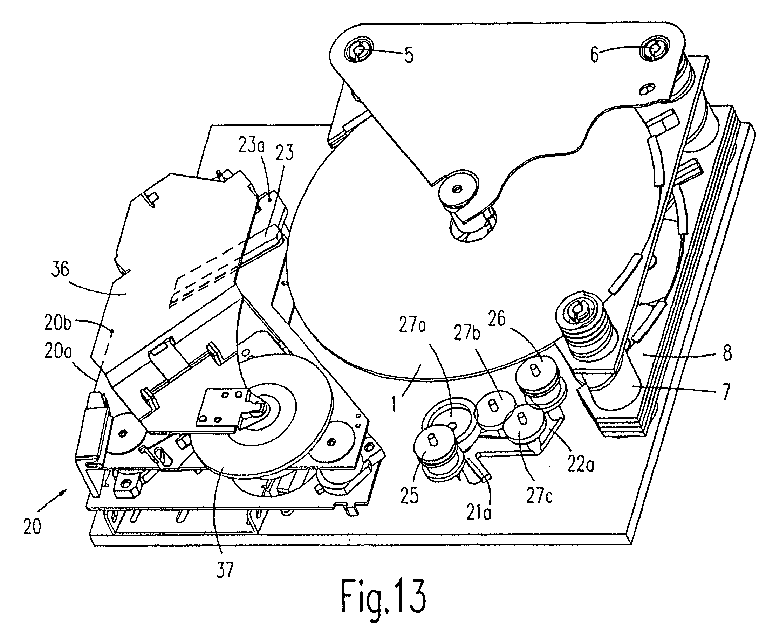

Die Fig. 12 und 13 zeigen das Wechslergerät mit der Informationsplatte 1 in der Ladeposition 16 gemäß Fig. 2, wobei die Fig. 12 eine Draufsicht und die Fig. 13 eine perspektivische Ansicht zeigt. Das zweite Transportrad 26 ist aus der Stapeleinheit 4 weggeschwenkt worden, so daß ausgehend von dieser in den Fig. 12 und 13 dargestellten Ladeposition 16 die Informationsplatte 1 nun zusammen mit dem ersten Ablagefach 8 gemäß Fig. 2 in eine der vier oberen Stapelpositionen 13a, 13b, 13c oder 13d mittels Rotation der Gewindespindeln 5, 6 und 7 transportiert werden kann. In umgekehrter Weise kann die Informationsplatte 1 aus der in der Fig. 13 dargestellten Ladeposition mittels Schwenken des zweiten Transportrades 26 gegen den Plattenrand 1a und entgegengesetzter Rotation des zweiten Transportrades 26 in die erste Zwischenposition und danach, angetrieben von dem ersten Transportrad 25, in die Auswurfposition transportiert werden.

In den Fig. 12 und 13 ist die Leseeinheit 30 vollständig aus dem Einwirkbereich der Stapeleinheit 4 herausgefahren.

## Patentansprüche

1. Wechsler-Gerät für Informationsplatten(1) mit einer Stapeleinheit (4) zur Stapelung von wenigstens zwei Ablagefächer (8, 9, 10), die zur Ablage von jeweils einer Informationsplatte (1) vorgesehen sind, in wenigstens zwei Stapelpositionen(13a, 13b, 14a, 14b), wobei die Ablagefächer (8, 9, 10) mit wenigstens einer ein Gewinde (5a) aufweisenden Spindel (5) gekoppelt sind und die Ablagefächer (8,9,10) mittels Rotation der Spindel (5) in einer vertikalen Richtung transportierbar sind, wobei ein oberer (13) und ein unterer (14) Stapelbereich der Stapeleinheit (4) zur Stapelung der Ablagefächer (8, 9, 10) vorgesehen ist und wobei eine Spielposition des Wechsler Gerätes zum Lesen von auf den Informationsplatten (1) gespeicherten Informationen und/oder zum Schreiben von Informationen auf die Informationsplatten vorgesehen ist, und wobei in einem Mittelbereich (15) der Stapeleinheit (4) zwischen dem oberen (13) und dem unteren (14) Stapelbereich eine Ladeposition vorgesehen ist, in die jeweils eines der Ablagefächer (8, 9, 10) mittels Rotation der Spindel (5) überführbar ist,
**dadurch gekennzeichnet,**
**dass** Transportmittel (20, 21, 22, 23, 25, 26, 27, 20a, 20c, 21a, 22a, 23b, 25b, 26b) zum Transport der Informationsplatte (1) aus dem sich in der Ladeposition befindlichen Ablagefach (8) in die Spielposition oder aus einer Auswurfposition in die Spielposition vorgesehen sind und diese Transportmittel (20, 21, 22, 23, 25, 26, 27, 0a, 20c, 21a, 22a, 23b, 25b, 26b) ebenfalls zum Transport der Informationsplatte (1) in die Auswurfposition, in der die Informationsplatte(1) aus dem Gerät entnehmbar ist, oder in die Ladeposition vorgesehen sind, wobei die Spielposition zwischen der Auswurf- und der Ladeposition angeordnet ist.

2. Wechsler-Gerät nach Anspruch 1, **dadurch gekennzeichnet, daß** der Mittelbereich in axialer Richtung der Spindel beiderseits der Ladeposition Abstandsbereiche aufweist, die einen axialen Abstand zwischen dem sich jeweils in der Ladeposition befindlichen Ablagefach und den axial benachbarten Ablagefächern in den Stapelpositionen sicherstellen.

3. Wechsler-Gerät nach Anspruch 1, **dadurch gekennzeichnet, daß** die mittlere Gewindesteigung der Spindel in der Ladeposition kleiner als die mittlere Gewindesteigung in dem oberen und dem unteren Stapelbereich ist.

4. Wechsler Gerät nach Anspruch 1, **dadurch gekennzeichnet, daß** die Gewindesteigung der Spindel in der Ladeposition im wesentlichen gleich Null ist.

5. Wechsler Gerät nach Anspruch 1, **dadurch gekennzeichnet, daß** die mittlere Gewindesteigung in den Abstandsbereichen größer als die mittlere Gewindesteigung in dem oberen und dem unteren Stapelbereich ist.

6. Wechsler-Gerät nach einem Anspruch 1, **dadurch gekennzeichnet, daß** zur Führung der Informationsplatten in den Ablagefächern der Stapeleinheit ein unterer und ein oberer Führungszapfen vorgesehen ist, der von oben bzw. von unten in die Mittelöcher der Informationsplatten einfahrbar ist.

7. Wechsler-Gerät nach einem Anspruch 1, **dadurch gekennzeichnet, daß** eine zum Lesen von auf den Informationsplatten gespeicherten Informationen und/oder zum Schreiben von Informationen auf die Informationsplatten vorgesehene Lese/Schreib-Einheit verschiebbar an einer Chassisplatte des Geräts angelagert ist.

8. Wechsler-Gerät nach Anspruch 7, **dadurch gekennzeichnet, daß** die Lese/Schreib-Einheit eine Basisplatte und eine Laserplatte aufweist, daß die Basisplatte und die Laserplatte mittels Dämpfern gekoppelt sind, daß die Basisplatte an der Chassisplatte verschiebbar angelagert ist und daß an der Laserplatte eine Klemmvorrichtung zum Festklemmen der Informationsplatte in der Spielposition und eine optische Einheit angeordnet sind.

9. Fahrzeug mit einem Wechsler-Gerät nach Anspruch 1.

## Claims

1. A changer apparatus for information discs (1), comprising a stacking unit (4) for stacking at least two holder compartments (8, 9, 10), adapted to hold one information disc (1) each, in at least two stacking positions (13a, 13b, 14a, 14b), the holder compartments (8, 9, 10) being coupled to at least one spindle (5) having a screwthread (5a) and the holder compartments (8, 9, 10) being movable in a vertical direction by rotation of the spindle (5), an upper stacking zone (13) and a lower stacking zone (14) of the stacking unit (4) being provided for stacking the holder compartments (8, 9, 10), and the changer apparatus having a play position for reading information stored on the information discs (1) and/or writing information on the information discs (1), while a loading position has been provided in a central zone (15) of the stacking unit (4) between the upper (13) and the lower (14) stacking zone, into which loading position one of the holder compartments (8, 9, 10) is each time movable by rotation of the spindle (5),
**characterized in that** transport means (20, 21, 22, 23, 25, 26, 27, 20a, 20c, 21a, 22a, 23b, 25b, 26b) are provided for transporting the information disc (1) from the holder compartment (8), which is in the loading position, or from an eject position into the play position, and said transport means (20, 21, 22, 23, 25, 26, 27, 20a, 20c, 21a, 22a, 23b, 25b, 26b) are also provided for transporting the information disc (1) into the eject position, in which the information disc (1) can be removed from the apparatus, or into the loading position, the play position being arranged between the eject position and the loading position.

2. A changer apparatus as claimed in Claim 1, **characterized in that** in the axial direction of the spindles the central zone has spacing zones at both sides of the loading position, which spacing zones define an axial spacing between the holder compartment in its loading position and the axially adjacent holder compartments in their stacking positions.

3. A changer apparatus as claimed in Claim 1, **characterized in that** the average screwthread pitch of the spindles in the loading position is smaller than the average screwthread pitch in the upper and the lower stacking zone.

4. A changer apparatus as claimed in Claim 1, **characterized in that** the screwthread pitch of the spindles in the loading position is substantially zero.

5. A changer apparatus as claimed in Claim 1, **characterized in that** the average screwthread pitch in the spacing zones is greater than the average screwthread pitch in the upper and the lower stacking zone.

6. A changer apparatus as claimed in Claim 1, **characterized in that** a lower and an upper guide pin are provided for guiding the information discs in the holder compartments of the stacking unit, which guide pins can engage the center holes of the information discs from above and from below, respectively.

7. A changer apparatus as claimed in Claim 1, **characterized in that** a read/write unit for reading information stored on the information discs and/or writing information on the information discs is movably supported on a chassis plate of the apparatus.

8. A changer apparatus as claimed in Claim 7, **characterized in that** the read/write unit comprises a base plate and a laser mounting plate, the base plate and the laser mounting plate are coupled by means of dampers, the base plate is slidably mounted on the chassis plate, and the laser mounting plate carries a clamping device for clamping the information disc in the play position and an optical unit for reading information stored on the information disc.

9. A motor vehicle including a changer apparatus as claimed in claim 1.

## Revendications

1. Changeur pour disques d'information (1) avec une unité d'empilage (4) pour l'empilage d'au moins deux tiroirs de logement (8, 9, 10) qui sont prévus pour le logement d'un disque d'information (1) respectif dans au moins deux positions d'empilage (13a, 13b, 14a, 14b), les tiroirs de logement (8, 9, 10) étant couplés avec au moins un axe (5) présentant un filet (5a) et les tiroirs de logement (8, 9, 10) pouvant être transportés à l'aide de la rotation des axes (5) dans une direction verticale, où une zone d'empilage supérieure (13) et une zone d'empilage inférieure (5) de l'unité d'empilage (4) sont prévues pour l'empilage des tiroirs de logement (8, 9, 10) et où une position de lecture du changeur est prévue pour la lecture d'informations enregistrées sur les disques d'information (1) et/ou pour l'écriture d'informations sur les disques d'informations et où, dans une zone centrale (15) de l'unité d'empilage (4), il est prévu entre les zones d'empilage supérieure (13) et inférieure (14) une position de chargement dans laquelle l'un des tiroirs de réception (8, 9, 10) peut respectivement être amené à l'aide de la rotation de l'axe (5),
**caractérisé en ce**
**que** les moyens de transport (20, 21, 22, 23, 25, 26, 27, 20a, 20c, 21a, 22a, 23b, 25b, 26b) pour le transport du disque d'information (1) hors du tiroir de logement (8) se trouvant dans la position de chargement dans la position de lecture ou hors d'une position d'éjection dans la position de lecture et ces moyens de transport (20, 21, 22, 23, 25, 26, 27, 20a, 20c, 21a, 22a, 23b, 25b, 26b) sont prévus également pour le transport du disque d'information (1) dans la position d'éjection dans laquelle le disque d'information (1) peut être extrait de l'appareil ou dans la position de chargement, où la position de lecture est disposée entre la position d'éjection et la position de chargement.

2. Changeur selon la revendication 1, **caractérisé en ce que** la zone centrale présente en direction axiale des axes, de part et d'autre de la position de chargement, des zones d'écartement qui garantissent un écartement axial entre le tiroir de logement se trouvant respectivement dans la position de chargement et les tiroirs de logement voisins axialement dans les positions d'empilage.

3. Changeur selon la revendication 1, **caractérisé en ce que** la pente moyenne du filet de l'axe dans la position de chargement est inférieure à la pente moyenne du filet dans les zones d'empilage supérieure et inférieure.

4. Changeur selon la revendication 1, **caractérisé en ce que** la pente du filet de l'axe dans la position de chargement est essentiellement égale à zéro.

5. Changeur selon la revendication 1, **caractérisé en ce que** la pente moyenne du filet dans les zones d'écartement est supérieure à la pente moyenne du filet dans les zones d'empilage supérieure et inférieure.

6. Changeur selon la revendication 1, **caractérisé en ce que**, pour le guidage des disques d'information dans les tiroirs de logement de l'unité d'empilage, il est prévu des tourillons de guidage inférieur et supérieur qui peuvent pénétrer par le haut ou par le bas dans les orifices centraux des disques d'information.

7. Changeur selon la revendication 1, **caractérisé en ce qu'**une unité de lecture/écriture prévue pour la lecture d'informations enregistrées sur les disques d'information et/ou pour l'écriture d'informations sur les disques d'information est logée à coulissement sur une plaque de châssis de l'appareil.

8. Changeur selon la revendication 7, **caractérisé en ce que** l'unité de lecture/écriture présente une plaque de base et une plaque laser, que la plaque de base et la plaque laser sont couplées à l'aide d'amortisseurs, que la plaque de base est logée à coulissement sur la plaque de châssis et qu'un dispositif de serrage du disque d'information dans la position de lecture et une unité optique sont disposés sur la plaque laser.

9. Véhicule avec un changeur selon la revendication 1.
